(19) Europäisches Patentamt / European Patent Office / Office européen des brevets

(11) **EP 3 239 902 B1**

(12) **FASCICULE DE BREVET EUROPEEN**

(45) Date de publication et mention de la délivrance du brevet:
**05.12.2018 Bulletin 2018/49**

(51) Int Cl.:
**G06K 9/00** *(2006.01)*      **G06F 11/10** *(2006.01)*
**G06F 21/64** *(2013.01)*

(21) Numéro de dépôt: **17168942.5**

(22) Date de dépôt: **02.05.2017**

(54) **PROCEDE DE VERIFICATION D'UNE AUTHENTIFICATION OU D'UNE IDENTIFICATION BIOMETRIQUE**

ÜBERPRÜFUNGSVERFAHREN EINER AUTHENTIFIZIERUNG ODER EINER BIOMETRISCHEN IDENTIFIZIERUNG

METHOD FOR VERIFYING AN AUTHENTICATION OR BIOMETRIC IDENTIFICATION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **29.04.2016 FR 1653890**

(43) Date de publication de la demande:
**01.11.2017 Bulletin 2017/44**

(73) Titulaire: **Safran Identity & Security**
**92130 Issy-les-Moulineaux (FR)**

(72) Inventeurs:
• **KEUFFER, Julien Paul**
**92130 Issy-les-Moulineaux (FR)**
• **CHABANNE, Hervé**
**92445 Issy-les-Moulineaux (FR)**
• **LESCUYER, Roch**
**92130 Issy-les-Moulineaux (FR)**

(74) Mandataire: **Regimbeau**
**87 rue de Sèze**
**69477 Lyon Cedex 06 (FR)**

(56) Documents cités:
• BRINGER JULIEN ET AL: "Some applications of verifiable computation to biometric verification", 2015 IEEE INTERNATIONAL WORKSHOP ON INFORMATION FORENSICS AND SECURITY (WIFS), IEEE, 16 novembre 2015 (2015-11-16), pages 1-6, XP032840440, DOI: 10.1109/WIFS.2015.7368568

• MICHAEL WALFISH ET AL: "Verifying computations without reexecuting them", COMMUNICATIONS OF THE ACM, ASSOCIATION FOR COMPUTING MACHINERY, INC, UNITED STATES, vol. 58, no. 2, 28 janvier 2015 (2015-01-28), pages 74-84, XP058064922, ISSN: 0001-0782, DOI: 10.1145/2641562

• THALER JUSTIN ED - WALTER DIDIMO ET AL: "Time-Optimal Interactive Proofs for Circuit Evaluation", 18 août 2013 (2013-08-18), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 71 - 89, XP047337801, ISSN: 0302-9743 ISBN: 978-3-642-21110-2 * Section 1.1, "Work on argument systems", deuxième paragraphe. *

• CHABANNE HERVÉ ET AL: "Delegating Biometric Authentication with the Sumcheck Protocol", 17 septembre 2016 (2016-09-17), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 236 - 244, XP047355453, ISSN: 0302-9743 ISBN: 978-3-642-21110-2 [extrait le 2016-09-17] * le document en entier *

**Description**

DOMAINE DE L'INVENTION

L'invention concerne un procédé de traitement de données biométriques, comprenant la vérification du résultat d'un calcul de distance impliquant le calcul d'un polynôme en les composantes des données, entre une donnée biométrique candidate et au moins une donnée biométrique de référence.
L'invention s'applique notamment à la vérification d'une authentification ou d'une identification biométrique mise en oeuvre par un dispositif personnel à un individu et non par une unité de traitement considérée digne de confiance comme une unité de traitement gouvernementale.
A cet égard, l'invention s'applique avantageusement à la vérification du calcul de distances comprenant le calcul d'un produit scalaire, à savoir des distances de type distance euclidienne ou distance de Hamming.

ETAT DE LA TECHNIQUE

On connaît déjà des schémas d'identification ou d'authentification dans lesquels un utilisateur présente à une unité de traitement digne de confiance, par exemple à une unité appartenant à une douane, une donnée biométrique que l'unité confronte à une ou plusieurs donnée(s) biométrique(s) de référence enregistrée(s) soit dans un document d'identité de l'utilisateur, soit dans une base de données à laquelle elle a accès.
Ce scénario présente l'avantage que le résultat de la comparaison entre les données biométriques est réputé fiable car la comparaison est mise en oeuvre par une unité de confiance. Cependant, l'étape d'identification ou d'authentification, comprenant l'acquisition d'une donnée biométrique fraîche sur l'utilisateur, peut durer un temps important et occasionner la création de files d'attentes. C'est le cas par exemple lors du franchissement d'une douane, où une authentification contre une donnée biométrique contenue dans un passeport d'un individu est mise en oeuvre.
Pour éviter ce type de désagrément, on pourrait envisager un scénario alternatif dans lequel l'utilisateur s'authentifierait ou s'identifierait à l'aide d'un dispositif électronique qui lui est personnel, tel qu'un téléphone mobile, et fournirait seulement à l'unité de traitement en charge du contrôle le résultat de cette authentification ou identification.
Dans ce cas, le problème se pose néanmoins de la fiabilité du résultat de l'authentification ou de l'identification, et notamment du résultat de la comparaison entre les données biométriques qui a permis à l'utilisateur de s'authentifier ou de s'identifier. Il est en effet nécessaire de proposer un moyen pour que l'unité de traitement en charge du contrôle puisse vérifier que le résultat est correct et que l'utilisateur n'a pas réalisé de fraude ou d'erreur dans la mise en oeuvre de la comparaison des données biométriques. Un procédé pour effectuer une authentification de données biométriques sur un serveur distant agissant comme entité de preuve et suivi d'une vérification de la preuve sur un terminal mobile est connu de "Some Applications of Verifiable Computation to Biometric Vérification" par Bringer et al, paru dans Workshop on Information Forensics and Security (WIFS), IEEE 2015.

PRESENTATION DE L'INVENTION

L'invention a pour but de résoudre la problématique présentée ci-avant, en proposant un procédé de vérification du résultat d'une comparaison entre deux données biométriques.
En particulier, un but de l'invention est de permettre à un utilisateur de réaliser avec un dispositif électronique personnel une authentification ou une identification biométrique, et de permettre à une entité de vérification de vérifier l'exactitude du calcul de distance entre les données biométriques ayant permis cette authentification ou identification.
Un autre but de l'invention est de permettre à l'utilisateur de prouver le résultat du calcul de distance entre les données biométriques, au moyen d'un dispositif électronique personnel de faibles capacités de calcul.
Un autre but de l'invention est d'être applicable à une authentification ou identification biométrique sur la base des traits biométriques suivants : iris ou forme du visage de l'individu (reconnaissance faciale).
Un autre but de l'invention est, dans le cas d'une identification, de permettre de vérifier simultanément le résultat du calcul de distance entre une donnée biométrique candidate et une pluralité de données biométriques de référence.
A cet égard, l'invention a pour objet un procédé de traitement de données biométriques, comprenant la vérification du résultat d'un calcul de distance entre une donnée biométrique candidate et au moins une donnée biométrique de référence comprenant chacune un nombre n de composantes indexées, ledit calcul de distance comprenant celui d'un polynôme en les composantes des données biométriques,
le procédé étant mis en oeuvre par une entité de preuve et une entité de vérification, chaque entité étant une unité de traitement comprenant des moyens de traitement et de communication avec l'autre entité, le procédé comprenant des étapes au cours desquelles :

- l'entité de preuve communique à l'entité de vérification le résultat du calcul de la distance entre les données biométriques candidate et de référence, ainsi que lesdites données,

- l'entité de preuve génère à partir de chaque donnée une fonction d'un nombre d de variables $f_a(i_1,...,i_d)$, $f_b(i_1,...,i_d)$ où $d=\log_2 n$, définie pour chaque variable sur l'ensemble $\{0,1\}$, par reformulation de l'indice i de chaque composante en format binaire,

- l'entité de preuve génère à partir de chaque fonction un polynôme de d variables $\tilde{a}(x_1,...x_d)$, $\hat{b}(x_1,...x_d)$ défini sur $\mathbb{F}^d$ où $\mathbb{F}$ est un corps fini, tel que chaque polynôme $\hat{a}$, $\hat{b}$ coïncide avec la fonction correspondante $f_a$, $f_b$ sur l'ensemble $\{0,1\}^d$, et génère à partir des polynômes $\hat{a}$, $\hat{b}$ un polynôme $p(x_1,...,x_d)$ de d variables de même expression que celui de la distance entre les données, et

- l'entité de preuve et l'entité de vérification (V) s'engagent dans un protocole Sumcheck (230) appliqué au polynôme p pour vérifier le résultat du calcul de la distance entre les données.

- Avantageusement, mais facultativement, le procédé selon l'invention peut en outre comprendre au moins l'une des caractéristiques suivantes : le calcul de distance comprend celui d'un produit scalaire, et le polynôme p comprend au moins un terme g égal à un produit scalaire entre les polynômes $\tilde{a}$ et $\hat{b}$ :

$$g(x_1,...,x_d) = \tilde{a}(x_1,...,x_d).\tilde{b}(x_1,...,x_d).$$

- la distance calculée est le carré de la distance euclidienne, et le polynôme p s'écrit :

$$p(x_1,...,x_d) = \tilde{a}(x_1,...,x_d).\tilde{a}(x_1,...,x_d) + \tilde{b}(x_1,...,x_d).\tilde{b}(x_1,...,x_d) - 2g(x_1,...,x_d).$$

- la distance calculée est la distance de Hamming, et le polynôme p s'écrit :

$$p(x_1,...,x_d) = \tilde{a}(x_1,...,x_d) + \tilde{b}(x_1,...,x_d) - 2g(x_1,...,x_d).$$

- la donnée biométrique candidate et la ou les données biométriques de référence sont initialement détenues par l'entité de preuve, et le procédé comprend une étape préliminaire de masquage, par l'entité de preuve, des données biométriques, ledit masquage comprenant la génération aléatoire d'une permutation circulaire et d'un vecteur de n composantes, et la mise en oeuvre d'une somme ou de l'opération « ou exclusif » entre chaque donnée permutée par la permutation circulaire et le vecteur généré aléatoirement.

- chaque polynôme $\tilde{a}(x_1,...x_d)$ et $\hat{b}(x_1,...x_d)$ est de degré un en chaque variable.

- le polynôme $\tilde{a}(x_1,...x_d)$ est défini par :

$$\forall x \in \mathbb{F}^d, \tilde{a}(x) = \sum_{i=(i_1,...,i_d)\in\{0,1\}^d} a(i)\chi_i(x)$$

avec :

$$\chi_v(x_1,...,x_d) = \prod_{k=1}^{d}\chi_{v_k}(x_k)$$

et où la fonction $\chi_{v_k}(x_k)$ est définie, pour $x_k \in \{0,1\}$, par :

$$\begin{cases} \chi_{v_k}(x_k) = 1 - x_k \ si \ v_k = 0 \\ \chi_{v_k}(x_k) = x_k \ si \ v_k = 1 \end{cases}.$$

- la mise en oeuvre du protocole Sumcheck comprend une série d'itérations pour j compris entre 2 et d-1 au cours desquelles l'entité de vérification génère aléatoirement et communique à l'entité de preuve une valeur $r_{j-1}$, et l'entité de preuve génère un polynôme :

$$p_j(X_j) = \sum_{x_{j+1}\in\{0,1\}\ldots x_d\in\{0,1\}} p(r_1,\ldots,r_{j-1},X_j,x_{j+1},\ldots,x_d)$$

et, à chaque itération,

○ l'entité de preuve dispose pour chaque polynôme â, $\tilde{b}$ d'un tableau $A^{(j)}$, $B^{(j)}$ comprenant respectivement toutes les valeurs possibles des fonctions $\tilde{a}(r_1,\ldots r_{j-2}, x_{j-1},\ldots x_d)$ et $\tilde{b}(r_1,\ldots r_{j-2},x_{j-1},\ldots x_d)$ pour $(x_{j-1},\ldots x_d) \in \{0,1\}^{d-j+1}$, où chaque valeur $r_k$ (k=1,...,j-2) a été générée aléatoirement par l'entité de vérification et transmise à l'entité de preuve lors des itérations précédentes,

○ l'évaluation d'un polynôme $p_j$ en une valeur t est mise en oeuvre par l'entité de preuve à partir des valeurs t, $r_{j-1}$ et des valeurs des tableaux $A^{(j)}$, $B^{(j)}$, et

○ l'entité de preuve incrémente les tableaux $A^{(j+1)}$, $B^{(j+1)}$ pour l'itération j+1 en remplaçant leurs valeurs par toutes les valeurs possibles $\tilde{a}(r_1,\ldots r_{j-1},x_j,\ldots x_d)$ et $\tilde{b}(r_1,\ldots r_{j-1},x_j,\ldots x_d)$ pour $(x_j,\ldots x_d) \in \{0,1\}^{d-j}$,

les tableaux étant initialisés pour le polynôme $p_2$ en comprenant toutes les valeurs possibles des polynômes ã, $\hat{b}$ sur l'ensemble $\{0,1\}^d$.

- Le procédé peut comprendre la vérification du résultat du calcul d'un produit scalaire entre une donnée biométrique candidate et chacune d'un nombre m de données biométriques de référence, dans lequel les données biométriques de référence sont réunies en une matrice M de taille (n,m) de sorte que les produits scalaires sont obtenus par le produit du vecteur candidat et de la matrice, et, le protocole Sumcheck est mis en oeuvre sur un polynôme $p_{(r_1,\ldots,r_d)}(j_1,\ldots j_d)$ tel que :

$$p_{(r_1,\ldots,r_d)}(j_1,\ldots,j_d) = \sum_{j_1,\ldots j_d \in \{0,1\}^d} \tilde{a}(j_1,\ldots,j_d).\widetilde{M}(j_1,\ldots,j_d,r_1,\ldots,r_d)$$

où $(r_1,\ldots,r_d)$ est un vecteur dont les composantes sont générées aléatoirement par l'entité de vérification.

L'invention a également pour objet un procédé d'authentification ou d'identification biométrique d'un individu, comprenant :

- la comparaison, par une entité de preuve, d'une donnée biométrique acquise sur un trait biométrique d'un individu à au moins une donnée biométrique de référence par calcul entre lesdites données d'une distance, et
- la mise en oeuvre du procédé selon le procédé qui précède pour la vérification du résultat de la comparaison.

Avantageusement, mais facultativement, dans le cas d'une authentification, l'entité de preuve est un dispositif électronique personnel à l'individu de type téléphone, ordinateur personnel ou tablette numérique comprenant un calculateur, un capteur d'images, et un module d'acquisition d'une donnée biométrique de référence contenue dans un document d'identité.

Selon un autre objet, l'invention concerne un produit programme d'ordinateur, comprenant des instructions de code pour la mise en oeuvre d'opérations de :

- acquisition d'une image et conversion de ladite image en une donnée biométrique comprenant n composantes,
- acquisition d'une donnée biométrique de référence enregistrée dans un document d'identité, la donnée comprenant n composantes,
- comparaison des deux données par calcul d'une distance entre les deux données comprenant le calcul d'un polynôme en les composantes des données,
- communication du résultat et desdites données à une entité de vérification,
- génération à partir de chaque composante $a_i$, $b_i$ de chaque donnée d'une fonction d'un nombre d de variables $a(i_1,\ldots,i_d)$, $b(i_1,\ldots,i_d)$ où $d=\log_2 n$, définie pour chaque variable sur l'ensemble $\{0,1\}$, par reformulation de l'indice i de la composante $a_i$, $b_i$ en format binaire,
- génération, à partir de chaque fonction, d'un polynôme de d variables $\tilde{a}(x_1,\ldots x_d)$ $\hat{b}(x_1,\ldots x_d)$ défini sur un corps fini, tel que chaque polynôme ã, $\hat{b}$ coïncide avec la fonction correspondante a,b sur l'ensemble $\{0,1\}^d$, et génération, à partir des polynômes ã et $\hat{b}$ d'un polynôme $p(x_1,\ldots,x_d)$ de d variables de même expression que celui de la distance entre les données,

- engagement, avec l'entité de vérification, dans un protocole de vérification Sumcheck appliqué au polynôme p.

Selon un autre objet, l'invention concerne l'application du protocole Sumcheck à un calcul de distance entre une donnée biométrique candidate et au moins une donnée biométrique de référence comprenant chacune n composantes, le calcul de distance comprenant celui d'un polynôme en les composantes des données,
dans lequel chaque donnée biométrique est convertie en un polynôme multivarié défini sur un corps fini par :

- reformulation de l'indice i de chaque composante de chaque donnée biométrique en format binaire, pour obtenir une fonction $(f_a, f_b)$ de d variable ou $\log_2 n$,
- extension de chaque fonction $(f_a, f_b)$ en un polynôme $\tilde{a}$, $\hat{b}$, de d variables défini sur un corps fini, et
- génération d'un polynôme p à partir des polynômes $\tilde{a}$ et $\hat{b}$ de même formule que le polynôme de la distance appliquée aux données biométriques.

Dans un mode de réalisation, l'invention concerne un procédé de traitement de données biométriques, comprenant la vérification du résultat d'un calcul de distance entre une donnée biométrique candidate et au moins une donnée biométrique de référence comprenant chacune un nombre n de composantes indexées $a_i$, $b_i$,
le procédé étant mis en oeuvre par une entité de preuve et une entité de vérification, chaque entité étant une unité de traitement comprenant des moyens de traitement et de communication avec l'autre entité, le procédé comprend des étapes au cours desquelles :

- l'entité de preuve communique à l'entité de vérification le résultat du calcul de la distance entre les données biométriques candidate et de référence, ainsi que lesdites données,
- l'entité de preuve génère à partir de chaque donnée une fonction d'un nombre d de variables $a(i_1,...,i_d)$, $b(i_1,...,i_d)$ où $d=\log_2 n$, définie pour chaque variable sur l'ensemble $\{0,1\}$, par reformulation de l'indice i de la composante $a_i$, $b_i$ en format binaire,
- l'entité de preuve génère à partir de chaque fonction un polynôme de d variables $\tilde{a}(x_1,...x_d), \hat{b}(x_1,...x_d)$ défini sur un corps fini, tel que chaque polynôme $\tilde{a}$, $\hat{b}$ coïncide avec la fonction correspondante a,b sur l'ensemble $\{0,1\}^d$, et génère à partir des polynômes $\tilde{a}$ et $\hat{b}$ un polynôme $p(x_1,...,x_d)$ de d variables de même expression que la distance entre les données, et
- l'entité de preuve et l'entité de vérification s'engagent dans un protocole au cours duquel :

   ◦ au cours d'une première étape, l'entité de preuve génère un polynôme $p_1$ d'une variable tel que :

$$p_1(X_1) = \sum_{x_2 \in \{0,1\}...x_d \in \{0,1\}} p(X_1, x_2, ..., x_d)$$

et communique le polynôme $p_1$ à l'entité de vérification qui vérifie que la somme des évaluations du polynôme $p_1$ en 0 et 1 est égale au résultat H du calcul de la distance, et dans ce cas,

pour tout j de 2 à d-1,

   ◦ l'entité de vérification génère aléatoirement une valeur $r_{j-1}$ dans le corps fini et la communique à l'entité de preuve,
   ◦ l'entité de preuve génère un polynôme $p_j$ tel que :

$$p_j(X_j) = \sum_{x_{j+1} \in \{0,1\}...x_d \in \{0,1\}} p(r_1, ..., r_{j-1}, X_j, x_{j+1}, ..., x_d)$$

et communique à l'entité de vérification le polynôme $p_j$,
   ◦ l'entité de vérification détermine la valeur du polynôme $p_{j-1}$ en $r_{j-1}$ et vérifie que $p_{j-1}(r_{j-1}) = p_j(0)+p_j(1)$, et dans le cas contraire détermine que le résultat du calcul de la distance est faux,

puis,

   ◦ l'entité de vérification génère aléatoirement une valeur $r_d$ dans le corps fini,

○ l'entité de preuve génère un polynôme $p_d$ tel que :

$$p_d(X_d) = p(r_1, \ldots, r_{d-1}, X_d)$$

et envoie à l'entité de vérification le polynôme $p_d$,
○ l'entité de vérification détermine $p_d(r_d)$ d'une part, et $p(r_1,\ldots,r_{n-1},r_d)$ d'autre part à partir des vecteurs candidat et de référence, vérifie que $p_d(r_d) = p(r_1,\ldots,r_{d-1},r_d)$, et dans ce cas détermine que le résultat du calcul de la distance est exact.

Dans un mode de réalisation, l'invention concerne un produit programme d'ordinateur comprenant des instructions pour la mise en oeuvre d'étapes de :

- acquisition d'une image et conversion de ladite image en une donnée biométrique comprenant n composantes,
- acquisition d'une donnée biométrique de référence enregistrée dans un document d'identité, la donnée comprenant n composantes,
- comparaison des deux données par calcul d'une distance entre les deux données,
- communication du résultat et desdites données à une entité de vérification,
- génération à partir de chaque composante $a_i$, $b_i$ de chaque donnée d'une fonction d'un nombre d de variables $a(i_1,\ldots,i_d)$, $b(i_1,\ldots,i_d)$ où $d=\log_2 n$, définie pour chaque variable sur l'ensemble {0,1}, par reformulation de l'indice i de la composante $a_i$, $b_i$ en format binaire,
- génération, à partir de chaque fonction, d'un polynôme de d variables $\tilde{a}(x_1,\ldots x_d)$ $\hat{b}(x_1,\ldots x_d)$ défini sur un corps fini, tel que chaque polynôme $\tilde{a}$, $\hat{b}$ coïncide avec la fonction correspondante a,b sur l'ensemble {0,1}$^d$, et génération, à partir des polynômes $\tilde{a}$ et $\hat{b}$ d'un polynôme $p(x_1,\ldots,x_d)$ de d variables de même expression que la distance entre les données,
- engagement, avec l'entité de vérification, dans un protocole de vérification comprenant :

    ○ génération et envoi à l'entité de vérification d'un polynôme $p_1$ tel que

$$p_1(X_1) = \sum_{x_2 \in \{0,1\} \ldots x_d \in \{0,1\}} p(X_1, x_2, \ldots, x_d)$$

    pour tout j de 2 à d-1,

    ○ génération et envoi à l'entité de vérification , à partir de valeurs $r_1,\ldots r_{j-1}$ reçues, d'un polynôme $p_j$ tel que :

$$p_j(X_j) = \sum_{x_{j+1} \in \{0,1\} \ldots x_d \in \{0,1\}} p(r_1, \ldots, r_{j-1}, X_j, x_{j+1}, \ldots, x_d)$$

    ○ génération et envoi à l'entité de vérification d'un polynôme $p_d$ tel que :

$$p_d(X_d) = p(r_1, \ldots, r_{d-1}, X_d)$$

lorsqu'il est mis en oeuvre par un calculateur.

Le procédé proposé permet de vérifier le résultat d'un calcul de distance entre au moins deux données biométriques. Pour cela le procédé utilise un protocole de type « Sumcheck », qui n'est applicable qu'à des vérifications de calculs de polynômes multivariés. Le procédé proposé permet de convertir des données biométriques en des polynômes multivariés pour permettre l'application du protocole « Sumcheck ». Cette conversion peut être réalisée par une unité de traitement disposant de moyens de calculs limités.

Le procédé proposé est applicable notamment à des calculs de distance comprenant le calcul d'un produit scalaire, comme la distance euclidienne au carré ou la distance de Hamming.

De plus le procédé est applicable à une vérification du résultat du calcul de distance entre une donnée biométrique et une pluralité de données biométriques de références, pour des applications d'identification, en regroupant les données biométriques de référence en une matrice pour l'application du protocole « Sumcheck ».

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente schématiquement un système pour l'identification ou l'authentification biométrique d'un individu avec vérification du résultat de la comparaison des données biométriques,
- La figure 2 représente schématiquement les principales étapes d'un procédé de traitement de données biométriques selon un mode de réalisation de l'invention.

DESCRIPTION DETAILLEE D'AU MOINS UN MODE DE REALISATION DE L'INVENTION

*Système d'authentification ou d'identification*

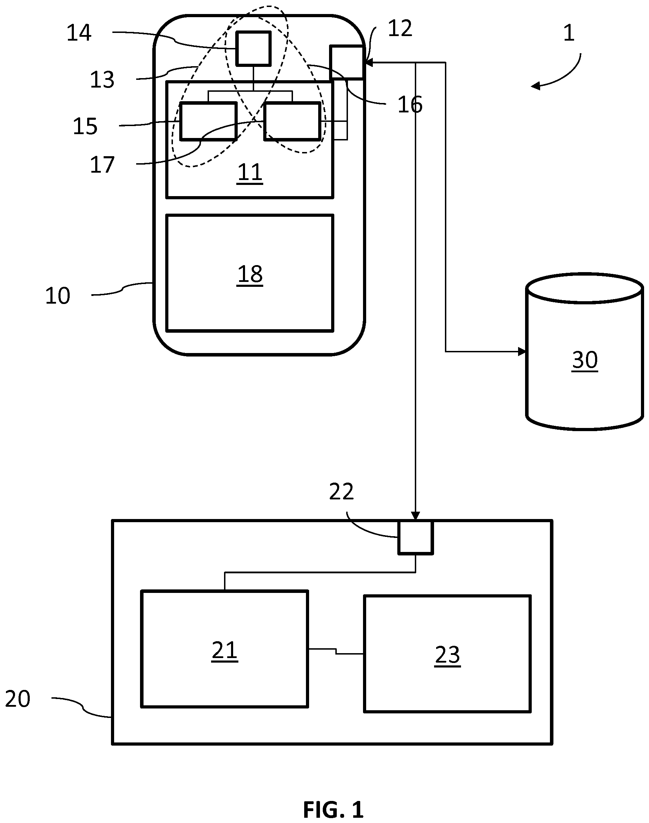

En référence à la figure 1, on a représenté schématiquement un système 1 pour l'identification ou l'authentification biométrique d'individus permettant une vérification du résultat de l'authentification ou de l'identification.

Ce système comprend deux unités de traitement 10, 20. La première unité de traitement 10 est une unité personnelle à un individu, comme par exemple son téléphone mobile, comme expliqué ci-après. La deuxième unité de traitement 20 est détenue et contrôlée par une entité auprès de qui l'authentification ou l'identification doit être effectuée, par exemple une entité gouvernementale, douanière, une société, etc.

L'une des unités de traitement met en oeuvre une authentification ou une identification sur des données biométriques, et fournit ensuite le résultat à l'autre, qui procède à la vérification de ce résultat. En particulier, dans le cas d'une authentification, la première unité de traitement 10 met en oeuvre l'authentification et fournit le résultat à la deuxième unité de traitement 20 qui vérifie ce résultat.

Dans le cas d'une identification, c'est de préférence la deuxième unité de traitement 20 qui a accès à une base de données comprenant des données biométriques de référence, et qui met en oeuvre l'identification biométrique contre ces données de référence à partir d'une donnée biométrique communiquée par la première unité de traitement 10. La deuxième unité de traitement 20 communique à la première 10 le résultat du calcul pour que la première unité le vérifie.

Néanmoins dans le cas de l'identification on peut également envisager d'inverser les rôles de calcul et de vérification.

L'unité de traitement 10, 20 mettant en oeuvre le calcul entre les données pour l'authentification ou l'identification est par la suite appelée entité de preuve P, et l'unité de traitement 20, 10 mettant en oeuvre la vérification du calcul entre les données est par la suite appelée entité de vérification V.

La première unité de traitement 10 comporte un calculateur 11, tel que par exemple un processeur, un microprocesseur, un contrôleur, un microcontrôleur, un FPGA etc. Ce calculateur est adapté pour exécuter des instructions de code pour mettre en oeuvre le procédé ci-après.

La première unité de traitement comprend avantageusement une interface de communication 12 lui permettant de dialoguer à distance avec la deuxième unité de traitement 20, et le cas échéant avec une mémoire distante 30 décrite ci-après.

Cette interface de communication 12 est de préférence la combinaison d'une interface de communication sans fil, par exemple de type Wifi ou Bluetooth ou réseau de téléphonie mobile (GPRS, 3G, 4G ou autre) et de tout autre réseau de communication aval faisant le lien avec la deuxième unité de traitement 20 et/ou la mémoire 30.

La première unité de traitement 10 comprend également un module 13 d'acquisition d'une donnée biométrique sur un trait biométrique d'un individu. Le trait biométrique peut par exemple être la forme du visage, ou un ou plusieurs iris de l'individu.

Le module d'acquisition de la donnée biométrique 13 comprend un capteur d'image 14, tel que par exemple un appareil photographique numérique ou une caméra numérique, adapté pour acquérir au moins une image d'un trait biométrique d'un individu, et un module 15 de traitement d'images adapté pour extraire une donnée biométrique à partir d'une image d'un trait biométrique.

L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

Le module de traitement d'images 15 est avantageusement un programme comprenant une série d'instructions pouvant être exécuté par le calculateur 11. Il s'agit de préférence d'un module logiciel.

L'unité de traitement 10 comprend également un module 16 d'acquisition ou d'accès à au moins une donnée biométrique de référence, afin de comparer une donnée biométrique acquise sur un individu par le module 13 à ladite donnée de référence.

Dans un mode de réalisation, l'unité de traitement 10 met en oeuvre une authentification de l'individu, c'est-à-dire compare une donnée biométrique candidate, acquise sur l'individu, à une seule donnée biométrique de référence, censée provenir du même individu, afin de vérifier que l'individu à partir duquel ont été obtenues les deux données est bien le même.

Dans ce cas, la donnée biométrique de référence utilisée pour l'authentification est avantageusement une donnée enregistrée dans un document d'identité de l'individu. Par exemple, la donnée biométrique peut être une image du visage figurant sur un document d'identité, ou encore une image du visage ou d'au moins un iris de l'individu enregistré dans une puce radiofréquence contenue dans le document.

Selon les cas présentés ci-avant, le module 16 comprend alors soit un capteur d'image, avantageusement le même capteur d'image 14 que celui utilisé pour l'acquisition de la donnée biométrique candidate, soit un lecteur de puce radiofréquence, par exemple un lecteur de type NFC.

Le module 16 comprend en outre un programme 17 exécutable par le calculateur, comprenant des instructions de code permettant la commande du capteur d'image ou du lecteur de puce radiofréquence, et le cas échéant le traitement d'une donnée biométrique obtenue par le capteur ou le lecteur pour extraire des éléments à comparer avec la donnée biométrique candidate. Par exemple si la donnée biométrique de référence est une photographie du visage de l'individu figurant sur le document d'identité, le programme exécutable par le module peut être configuré pour en extraire des points caractéristiques du visage comparables à ceux extraits de la donnée candidate.

En variante, une identification biométrique de l'individu peut être mise en oeuvre, au cours de laquelle la donnée biométrique candidate acquise sur l'individu est comparée à une pluralité de données biométriques de référence, en vue de déterminer si l'une des données de référence correspond à la donnée candidate. L'individu est alors identifié comme étant l'individu duquel provient la donnée de référence.

Dans ce cas les données biométriques de référence peuvent être stockées dans une mémoire 30 distante de la première (et éventuellement de la deuxième) unité de traitement, comme par exemple une base de données gérée par une entité privée ou gouvernementale, etc.

Si l'identification biométrique est réalisée par la première unité de traitement 10, cette unité est adaptée pour accéder à ces données par l'interface de communication à distance 12. Le module 16 comprend alors un programme 17 exécutable par le calculateur 11 et comprenant des instructions de code permettant de commander l'interface de communication à distance 12 pour accéder au contenu de la mémoire 30. C'est le cas représenté sur la figure 1.

En variante, c'est la deuxième unité de traitement qui réalise l'identification et détient ces moyens d'accès aux données de références.

Avantageusement, toutes les fonctionnalités d'acquisition et de traitement d'une donnée biométrique candidate, d'accès à une donnée biométrique de référence, de comparaison entre la donnée candidate et la ou les donnée(s) de référence pour réaliser l'authentification ou l'identification, et de participation au procédé de vérification du résultat de la comparaison avec la deuxième unité de traitement 20, sont réunies au sein d'un même programme exécutable par le calculateur, avantageusement une application logicielle. Avantageusement, l'application peut être téléchargée au moyen de l'interface de communication à distance 12 pour être installée sur l'unité de traitement 10.

La première unité de traitement peut également comprendre une interface Homme Machine 18, typiquement mais non limitativement un écran tactile, permettant d'afficher et de recevoir des informations et des instructions pour la bonne exécution du procédé décrit ci-après par un individu.

La deuxième unité de traitement 20 comporte un calculateur 21, tel que par exemple un processeur, un microprocesseur, un contrôleur, un microcontrôleur, un FPGA etc. Ce calculateur est adapté pour exécuter des instructions de code pour mettre en oeuvre le procédé ci-après.

La deuxième unité de traitement 20 comprend avantageusement une interface de communication 22 lui permettant de dialoguer à distance avec la première unité de traitement 10.

Cette interface de communication 22 est de préférence la combinaison d'une interface de communication sans fil, par exemple de type Wifi ou Bluetooth ou réseau de téléphonie mobile (GPRS, 3G, 4G ou autre) et de tout autre réseau de communication aval faisant le lien avec la première unité de traitement 10.

Avantageusement, dans le cas où le système 1 permet de mettre en oeuvre une identification biométrique d'individus, cette identification peut être mise en oeuvre par la deuxième unité de traitement 20, qui est alors adaptée pour accéder aux données biométriques de référence contenues dans la mémoire distante 30 par l'interface de communication à distance 22.

En outre elle comprend alors un module d'accès aux données de référence comprenant alors un programme exécutable par le calculateur 21, et comprenant des instructions de code permettant de commander l'interface de communication à distance 22 pour accéder au contenu de la mémoire 30. Il s'agit d'une variante non représentée du cas représenté en figure 1.

L'unité de traitement 20 comprend avantageusement une interface Homme Machine 23, par exemple un écran tactile, ou un écran et un clavier, permettant d'afficher et de recevoir des informations et instructions pour la mise en oeuvre du procédé décrit ci-après.

Très avantageusement, la première unité de traitement 10 décrite ci-avant est un dispositif électronique personnel à l'individu, par exemple un téléphone mobile ou « smartphone », une tablette électronique ou encore un ordinateur personnel.

Ceci permet à un individu de réaliser lui-même une authentification avant d'en présenter le résultat à la deuxième unité de traitement 20. Ainsi l'étape chronophage d'authentification comprenant l'acquisition d'une donnée biométrique fraîche sur l'individu et sa comparaison avec une ou plusieurs données de référence est déportée en amont d'un contrôle par la deuxième unité de traitement 20.

Un cas d'application est le franchissement d'une douane par un individu. Celui-ci peut utiliser son dispositif électronique personnel pour réaliser une authentification biométrique contre son passeport avant le franchissement de la douane. Puis, au moment de ce franchissement de la douane, l'individu fournit le résultat à la deuxième unité de traitement 20 agissant en tant qu'entité de vérification V (qui est contrôlée par une autorité gouvernementale, par exemple douanière) au moyen de son dispositif personnel 10. L'entité de vérification ne procède alors qu'à la vérification. Ceci réduit le temps de franchissement de la douane et donc les files d'attente pouvant être occasionnées.

Un autre cas d'application est l'embarquement d'un individu dans un moyen de transport, par exemple un avion. L'individu peut, en amont de l'embarquement, acquérir une donnée biométrique fraîche au moyen de son dispositif personnel 10 et communiquer cette donnée à la deuxième unité de traitement 20. Cette unité réalise une identification contre une liste de passagers enregistrés pour l'embarquement, et au moment de l'embarquement, apporte uniquement la preuve de cette identification au dispositif personnel 10 de l'individu en tant qu'entité de vérification V.

Dans toute la suite, le procédé est décrit en référence aux entités de preuve P et de vérification V sans expliciter les unités de traitement correspondantes, étant entendu que dans le cas d'une authentification l'entité de preuve P est la première unité de traitement 10, tandis que dans le cas d'une identification l'entité de preuve P est de préférence la deuxième unité de traitement 20.

*Procédé d'authentification ou d'identification avec vérification*

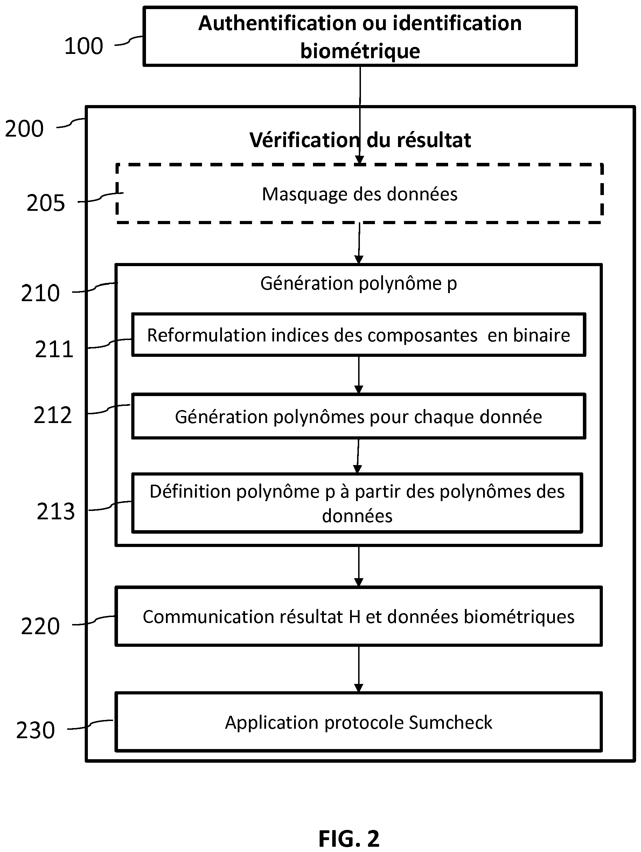

En référence à la figure 2, on va maintenant décrire un procédé d'authentification ou d'identification mis en oeuvre par le système 1 décrit ci-avant.

Au cours d'une première étape 100, l'entité de preuve P met en oeuvre une authentification ou une identification biométrique d'un individu.

Cette étape comprend au préalable la récupération par l'entité de preuve P d'une donnée biométrique candidate et d'au moins une donnée biométrique de référence.

L'acquisition de la donnée biométrique candidate est mise en oeuvre par le module d'acquisition 13 de donnée biométrique candidate de la première unité de traitement 10, par exemple par l'acquisition d'une photographie d'un trait biométrique de l'individu, puis traitement pour obtenir une donnée. Le cas échéant, cette donnée est transmise à l'entité de preuve P si celle-ci est l'unité de traitement 20.

L'acquisition de la ou des donnée(s) biométrique(s) de référence peut être mise en oeuvre par le module 16 d'accès à une ou plusieurs donnée(s) biométrique(s) de référence accède de la première unité de traitement 10, qui accède à une donnée biométrique enregistrée dans la puce d'un passeport par lecture de la puce, ou à un ensemble de données enregistrées dans la base de données 30.

En variante, elle peut être mise en oeuvre par un module d'accès à des données de référence enregistrées dans la mémoire distante 30 de la deuxième unité de traitement 20.

L'entité de preuve P compare ensuite la donnée biométrique candidate à la ou les données biométriques de référence. La mise en oeuvre de la comparaison comprend le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails ci-avant.

L'individu est authentifié ou identifié si la comparaison révèle un taux de similarité entre la donnée candidate et une donnée de référence excédant un certain seuil, dont la définition dépend de la distance calculée.

*Vérification de la comparaison*

Le procédé comprend ensuite une étape 200 de vérification du résultat de la comparaison entre les données biométriques. Cette étape est mise en oeuvre conjointement par l'entité de preuve P et l'entité de vérification V.

Chaque donnée biométrique est un vecteur comprenant un nombre entier n de composantes indexées, n étant strictement supérieur à 1. On note a=(a$_1$,...,a$_n$) et b=(b$_1$,...b$_n$) les données biométriques candidate et de référence, respectivement, avec leurs composantes $a_i, b_i \epsilon \mathbb{Z}$.

L'étape de vérification 200 comprend une première étape 210 au cours de laquelle l'entité de preuve P génère, à partir des données biométriques impliquées dans la comparaison, un polynôme multivarié de même formule que la formule de la distance appliquée entre les données biométriques et qui coïncide avec la valeur de la distance en les valeurs des composantes.

Pour ce faire, en notant $d = log_2 n$, l'entité de preuve P génère d'abord, au cours d'une sous-étape 211, pour chaque donnée a,b, une fonction f$_a$, f$_b$ de d variables, en reformulant l'indice i de chaque composante de la donnée en un vecteur binaire (i$_1$,...i$_d$) où les i$_j$ sont à valeurs dans {0,1}.

On définit ainsi les fonctions f$_a$ et f$_b$ :

$$f_a : (i_1, \dots i_d) \mapsto a_i$$

$$f_b : (i_1, \dots i_d) \mapsto b_i$$

Les fonctions f$_a$ et fb sont définies sur {0,1}$^d$.

Lors d'une sous-étape 212, l'entité de preuve P étend le domaine de définitions de ces fonctions en générant, à partir de ces fonctions des polynômes de d variables, définis sur $\mathbb{F}^d$ où $\mathbb{F}$ est un corps fini.

Pour $x_k \in \{0,1\}$, on définit une fonction $\chi_{x_k}$ définie sur le corps $\mathbb{F}$ par :

$$\begin{cases} \chi_{x_k}(x) = 1 - x \ si \ x_k = 0 \\ \chi_{x_k}(x) = x \ si \ x_k = 1 \end{cases}$$

Si l'entrée x de la fonction appartient à {0,1}, alors cette fonction retourne la valeur 1 si x=x$_k$ et 0 sinon.

En notant v un vecteur comprenant d composantes binaires, et

$$x \epsilon \mathbb{F}^d$$

on note $\chi_v$ l'extension de la fonction $\chi_{x_k}$ valant 1 si le vecteur x est égal à v et 0 sinon, cette fonction $\chi_v$ étant définie comme suit :

$$\chi_v(x_1, \dots, x_d) = \prod_{k=1}^{d} \chi_{v_k}(x_k)$$

où k est un indice muet à valeurs entières entre 1 et d.

Au cours de la sous-étap"e 212, l'entité de preuve P génère deux polynômes $\tilde{a}, \tilde{b}$ à d variables définis sur le corps $\mathbb{F}^d$ à partir respectivement des fonctions a et b comme suit :

$$\forall x \epsilon \mathbb{F}^d, \tilde{a}(x) = \sum_{i=(i_1,\dots,i_d) \epsilon \{0,1\}^d} f_a(i)\chi_i(x)$$

$$\forall x \epsilon \mathbb{F}^d, \tilde{b}(x) = \sum_{i=(i_1,\dots,i_d) \epsilon \{0,1\}^d} f_b(i)\chi_i(x)$$

Le polynôme $\tilde{a}$ (respectivement $\tilde{b}$) est une extension multilinéaire de la fonction f$_a$ (respectivement f$_b$), car le terme de droite dans la définition du polynôme est égal à f$_a$(i$_1$,...,i$_d$) (respectivement f$_b$(i1,...,i$_d$)) pour chaque (i$_1$,...,i$_d$) $\in \{0,1\}^d$, et donc aux composantes de la donnée a (respectivement b). Ces polynômes sont en outre de degré au plus 1 en chaque variable.

A l'issue de ces sous-étapes, la distance entre les deux données biométriques peut donc être reformulée avec ces polynômes.

Pour ce faire, l'entité de preuve P génère lors d'une sous-étape 213, à partir des polynômes $\tilde{a}$ et $\tilde{b}$ un polynôme p de d variables. Le polynôme p est de même expression que l'expression de la distance entre les données biométriques, c'est-à-dire que la formule appliquée aux données biométriques pour obtenir la distance entre les données est identique à celle appliquée aux polynômes $\tilde{a}$ et $\tilde{b}$ pour obtenir le polynôme p.

Par construction des polynômes $\tilde{a}$ et $\tilde{b}$, le polynôme p concorde avec la valeur de la distance entre les données biométriques sur l'ensemble $\{0,1\}^d$. Quelques exemples de polynômes p sont fournis ci-après.

En particulier, certaines distances, comme la distance de Hamming et la distance euclidienne, comprennent le calcul d'un produit scalaire entre les deux données comparées.

En reprenant les expressions initiales des données biométriques $a=(a_1,...,a_n)$ et $b=(b_1,...b_n)$, le produit scalaire se calcule $a.b=\sum_{i=1}^{n} a_i.b_i$.

Si la formule de la distance entre les deux données est égale à celle du produit scalaire, alors le polynôme p s'écrit comme suit, en reprenant les expressions des polynômes $\tilde{a}$ et $\tilde{b}$ :

$$p(x_1,...,x_d) = \tilde{a}(x_1,...,x_d).\tilde{b}(x_1,...,x_d)$$

Le carré de la distance euclidienne entre deux données biométriques s'écrit comme suit :

$$(a-b)^2 = a^2 + b^2 - 2a.b = \sum_{i=1}^{n} a_i^2 + b_i^2 - 2a_i.b_i$$

Le polynôme p pour reformuler cette distance s'écrit alors :

$$p(x_1,...,x_d) = \tilde{a}(x_1,...,x_d).\tilde{a}(x_1,...,x_d) + \tilde{b}(x_1,...,x_d).\tilde{b}(x_1,...,x_d)$$
$$- 2\tilde{a}(x_1,...,x_d).\tilde{b}(x_1,...,x_d).$$

Dans le cas où la distance entre les données est la distance de Hamming, cette distance fournit le nombre de bits différents entre les deux données biométriques comparées. La distance de Hamming s'écrit :

$$card\{i \text{ tels que } a_i \neq b_i\}$$

En considérant que les composantes des données biométriques sont toujours égales soit à 0 soit à 1, comme $a_i$ vaut 0 ou 1, on obtient toujours le résultat : $a_i^2=a_i$ et idem pour $b_i$.

De plus, $(a_i-b_i)^2=0$ si $a_i=b_i$ et $(a_i-b_i)^2=1$ si $a_i\neq b_i$, car seuls les quatre cas suivants sont possibles :

- $a_i=b_i=1$, et alors $(a_i-b_i)^2=0^2=0$,
- $a_i=b_i=0$, et alors $(a_i-b_i)^2=0^2=0$,
- $a_i=1$ et $b_i=0$, et alors $(a_i-b_i)^2=1^2=0$,
- $a_i=0$ et $b_i=1$, et alors $(a_i-b_i)^2=(-1)^2=0$.

De ce fait la distance de Hamming peut être reformulée comme suit :

$$card\{i \text{ tels que } a_i \neq b_i\} = \sum_{i=1}^{n} (a_i - b_i)^2 = \sum_{i=1}^{n} a_i^2 + b_i^2 - 2a_i.b_i = \sum_{i=1}^{n} a_i + b_i - 2a_i.b_i$$

Le polynôme p de plusieurs variables généré à partir de la formule de la distance de Hamming est donc le

suivant :

$$p(x_1, \dots, x_d) = \tilde{a}(x_1, \dots, x_d) + \tilde{b}(x_1, \dots, x_d) - 2\tilde{a}(x_1, \dots, x_d).\tilde{b}(x_1, \dots, x_d)$$

L'étape de vérification 200 comprend également une étape 220 au cours de laquelle l'entité de preuve P communique à l'entité de vérification V les éléments suivants :

- le résultat du calcul de la distance entre les données biométriques, noté H, pour que le résultat de ce calcul soit vérifié par l'entité de vérification, et
- les données biométriques a,b ayant servi de base au calcul.

Avantageusement, mais facultativement, dans le cas où l'entité de preuve P détient à l'origine la donnée candidate ainsi que les données de référence (typiquement, c'est le cas de l'authentification), l'entité de preuve P peut masquer les données biométriques avant de générer, à partir de ces données, le polynôme p et de communiquer le résultat H ainsi que ces données à l'entité de vérification V, ceci afin de préserver leur confidentialité. Le masquage est adapté pour préserver la valeur de la distance calculée entre les données, c'est-à-dire que la distance entre les données masquées est égale à la distance entre les données non masquées.

Dans le cas d'une authentification basée sur la reconnaissance faciale (données biométriques obtenues à partir d'images du visage de l'individu), le calcul de distance mis en oeuvre entre les données est celui d'une distance euclidienne. Le masquage est alors mis en oeuvre en générant aléatoirement une permutation $\pi$ et un vecteur de n composantes $(t_1, \dots t_n)$ dans le corps fini $\mathbb{F}$, et en permutant la donnée et lui additionnant le vecteur généré aléatoirement.

En notant $c_1, \dots c_n$ une donnée initiale, elle est masquée en $c_m$ telle que :

$$c_m = \pi(c) + (t_1, \dots, t_n)$$

On constate que le carré de la distance euclidienne entre deux données $c_{ref}$ et $c$ masquées s'écrit :

$$\left(\pi(c_{ref}) + (t_1, \dots, t_n) - \pi(c) - (t_1, \dots, t_n)\right)^2 = \left(\pi(c_{ref}) - \pi(c)\right)^2 = (c_{ref} - c)^2$$

Le masquage conserve donc la valeur de la distance entre les données.

Dans le cas d'une authentification basée sur la reconnaissance d'iris (données biométriques obtenues à partir d'images d'iris de l'individu), le calcul de distance mis en oeuvre entre les données est celui d'une distance de Hamming. Le masquage est mis en oeuvre en générant aléatoirement une permutation $\pi$ et un vecteur de n composantes $(t_1, \dots t_n)$ dans le corps fini $\mathbb{F}$, et en effectuant l'opération « Ou exclusif » (XOR) entre la donnée permutée et le vecteur aléatoire :

$$c_m = \pi(c) XOR(t_1, \dots, t_n)$$

Pour pouvoir préserver la distance entre les données biométriques avant et après masquage, la permutation circulaire et le vecteur généré aléatoirement sont les mêmes pour la donnée biométrique candidate et la ou les données biométriques de référence.

L'étape de masquage 205 est mise en oeuvre avant l'étape 210 de calcul du polynôme p et l'étape 220 de communication des données et du résultat H de la distance.

Puis au cours d'une étape 230, l'entité de preuve P et l'entité de vérification V s'engagent dans un protocole de vérification du résultat H, appelé protocole « Sumcheck ». Le protocole Sumcheck a été décrit dans la publication « Algebraic methods for interactive proof systems » de Lund, Fortnow, Karloff et Nisan, publié en 1992 dans Journal of the Association for Computing Machinery.

Le protocole « Sumcheck » s'applique de manière générale à la vérification d'un résultat sous la forme :

$$\sum_{x_1 \in \{0,1\}} \sum_{x_2 \in \{0,1\}} \dots \sum_{x_n \in \{0,1\}} g(x_1, \dots, x_n)$$

Où g est un polynôme de n variables défini sur $\mathbb{F}^d$ et de degré d.

Or, l'étape 210 décrite ci-avant a permis de ramener l'expression de la distance entre les données biométriques à un tel polynôme. Par conséquent, le protocole Sumcheck de vérification de la valeur du résultat H peut être appliqué en remplaçant g dans l'équation ci-dessus par le polynôme p défini lors de l'étape 210, car la valeur H de la distance entre les données biométriques transmise à l'entité de vérification V correspond à la valeur suivante :

$$H = \sum_{x_1 \in \{0,1\}} \sum_{x_2 \in \{0,1\}} \dots \sum_{x_n \in \{0,1\}} p(x_1, \dots, x_n)$$

On va maintenant décrire la mise en oeuvre du protocole Sumcheck.

*Description du protocole « Sumcheck »*

Au cours d'une première étape, l'entité de preuve P génère un polynôme $p_1$ d'une variable tel que :

$$p_1(X_1) = \sum_{x_2 \in \{0,1\}\dots x_d \in \{0,1\}} p(X_1, x_2, \dots, x_d)$$

L'entité de preuve P communique le polynôme $p_1$ à l'entité de vérification V.

L'entité de vérification V vérifie que la somme $p_1(0)+p_1(1)$ des évaluations du polynôme $p_1$ en 0 et 1 est égale au résultat H du calcul de la distance qu'elle a reçue à l'étape 220. Si ce n'est pas le cas, alors l'entité de vérification V rejette le résultat H comme étant erroné. Sinon, l'entité de vérification V poursuit le protocole comme suit.

Pour tout j de 2 à d-1, une série d'échanges identiques a lieu entre l'entité de vérification et l'entité de preuve, chaque échange se déroulant comme suit.

L'entité de vérification V génère aléatoirement une valeur $r_{j-1}$ dans le corps fini $\mathbb{F}$ et la communique à l'entité de preuve P,

L'entité de preuve P génère un polynôme $p_j$ tel que :

$$p_j(X_j) = \sum_{x_{j+1} \in \{0,1\}\dots x_d \in \{0,1\}} p(r_1, \dots, r_{j-1}, X_j, x_{j+1}, \dots, x_d)$$

et communique à l'entité de vérification V le polynôme $p_j$,

L'entité de vérification V détermine la valeur du polynôme $p_{j-1}$ en $r_{j-1}$ et la valeur du polynôme $p_j$ en 0 et en 1, et vérifie que $p_{j-1}(r_{j-1}) = p_j(0)+p_j(1)$.

Si l'égalité n'est pas vérifiée, alors l'entité de vérification V détermine que le résultat du calcul de la distance est faux.

Si l'égalité est vérifiée, le protocole continue en incrémentant j de 1.

A l'issue des itérations de j allant de 2 à d-1, si toutes les vérifications ont été satisfaites, l'entité de vérification V génère aléatoirement une valeur $r_d$ dans le corps fini $\mathbb{F}$.

L'entité de preuve P génère un polynôme $p_d$ tel que :

$$p_d(X_d) = p(r_1, \dots, r_{d-1}, X_d)$$

et communique à l'entité de vérification V le polynôme $p_d$,

L'entité de vérification V détermine $p_d(r_d)$ d'une part à partir du polynôme $p_d$ communiqué par l'entité de preuve P et de la valeur $r_d$ qu'elle a générée.

D'autre part, l'entité de vérification V détermine la valeur $p(r_1,\dots,r_{d-1},r_d)$ à partir des données biométriques que lui a transmises l'entité de preuve P. Pour ce faire, l'entité de vérification V reconstruit le polynôme p de la même manière que décrit en référence à l'étape 210 du procédé à partir des données biométriques, et évalue le polynôme en les valeurs $r_1,\dots r_d$ qu'elle a générées.

L'entité de vérification V vérifie alors que $p_d(r_d) = p(r_1,\dots,r_{d-1},r_d)$, et dans ce cas détermine que le résultat H du calcul de la distance est exact, avec une probabilité très élevée.

En effet, il a été démontré que deux polynômes distincts de degré d dont les entrées sont à valeurs dans le corps $\mathbb{F}$ ne peuvent coïncider au maximum que sur une proportion de d/|$\mathbb{F}$| points. Par conséquent, si le résultat H du calcul de la distance des données biométriques par l'entité de preuve P est exact, l'entité de vérification V l'acceptera toujours, et s'il est faux, la probabilité que l'entité de vérification V le rejette est supérieure à

$$(1 - \frac{d}{|\mathbb{F}|})^n.$$

Dans le contexte du protocole,

$$|\mathbb{F}| >> d$$

de sorte que la probabilité que l'entité de vérification V rejette le résultat est supérieure à

$$1 - nd/|\mathbb{F}|.$$

*Variantes d'implémentation du protocole*

Dans la description qui précède du protocole « Sumcheck », lorsque l'entité de preuve P communique un polynôme $p_j$, j compris entre 1 et d, à l'entité de vérification V, elle peut le faire en communiquant les coefficients du polynôme à l'entité de vérification V. L'entité de vérification V évalue ensuite le polynôme obtenu en 0 et en 1 pour toutes les itérations où elle doit vérifier la somme de l'évaluation du polynôme en 0 et en 1.

Alternativement, l'entité de preuve P peut fournir à l'entité de vérification V un nombre suffisant d'évaluations du polynôme en différents points pour que l'entité de vérification V puisse ensuite interpoler le polynôme, c'est-à-dire un nombre d'évaluations strictement supérieur au degré du polynôme.

Dans le cas où le polynôme correspond à une distance impliquant le calcul d'un produit scalaire, d'après la définition qui a été donnée des polynômes $\tilde{a}$ et $\tilde{b}$, ces polynômes sont de degré 1 en chaque variable et le polynôme p est de degré au plus 2 en chaque variable. Dans ce cas il suffit à l'entité de preuve P d'envoyer l'évaluation des polynômes $p_j$ pour j=1 à d en seulement trois valeurs.

En effet, il est connu (voir le document « Time-Optimal Interactive Proofs for Circuit Evaluation », Justin Thaler et al., in Network and Parallel Computing, 2013) d'appliquer Sumcheck à des polynômes dérivés de matrices, et non de vecteurs (on rappelle que chaque donnée biométrique est un vecteur comprenant un nombre entier n de composantes indexées).

En conséquence, les polynômes dérivés à partir de matrices auront des variables correspondant à chaque dimension. Dans ce cas, Thaler propose d'utiliser un premier challenge pour en quelque sorte poser une question à l'entité de preuve P sur la valeur d'un terme de la matrice produit, cette valeur pouvant alors être prouvée avec le protocole Sumcheck.

Dans notre cas, l'expression dérivée permet d'appliquer directement (en d'autres termes sans challenge) et efficacement (une interaction de moins est requise) le protocole Sumcheck. Cela signifie que la mise en oeuvre du protocole Sumcheck comprend directement, c'est-à-dire sans étape intermédiaire de challenge, la génération par l'entité de preuve P à partir du polynôme p des j polynômes $p_j$ d'une seule variable.

De préférence, pour les polynômes $p_j$, j = 1 à d-1, l'entité de preuve P envoie les évaluations de ces polynômes en 0, en 1, et en une troisième valeur quelconque, car cela permet à l'entité de vérification V de réutiliser directement les valeurs en 0 et en 1 pour la vérification qu'elle mène à chaque itération.

En outre il est possible de rendre plus efficace l'implémentation du protocole Sumcheck et notamment l'expression des polynômes $p_j$, j compris entre 2 et d, à partir du polynôme p.

Soit A et B deux tableaux de taille n.

Les tableaux A et B sont générés par l'entité de preuve P, de manière à comprendre initialement toutes les valeurs possibles des polynômes $\tilde{a}(x_1,...,x_d)$ et $\tilde{b}(x_1,...x_d)$ pour $(x_1,...x_d) \in \{0,1\}^d$.

Au cours d'une itération j du protocole Sumcheck, j allant de 2 à d-1, les polynômes $p_j$ doivent être évalués en des points de la forme $(r_1,...,r_{j-1},t,x_{j+1},...x_d)$, où t peut prendre les valeurs 0, 1, et une troisième valeur, et les $(x_{j+1},...,x_d) \in \{0,1\}^d$. Ceci implique d'évaluer également les polynômes $\tilde{a}$ et $\tilde{b}$ en des points de la même forme. Or, à chaque itération, les évaluations de ces polynômes peuvent être simplifiées en réutilisant des résultats d'une itération précédente.

Par exemple, pour le polynôme $p_2$, on note

$$G = \tilde{a}(r_1, x_2, \ldots, x_d)$$

D'après la définition du polynôme $\tilde{a}$ :

$$G = \sum_{i_1,\ldots,i_d \in \{0,1\}^d} a(i_1, \ldots, i_d)\, \chi_i(r_1, x_2, \ldots, x_d)$$

$$G = \sum_{i_1,\ldots,i_d \in \{0,1\}^d} \chi_{i_1}(r_1) a(i_1, \ldots, i_d) \prod_{k=2}^{d} \chi_{i_k}(x_k)$$

$$G = \sum_{i_2,\ldots,i_d \in \{0,1\}^{d-1}} \chi_0(r_1) a(0, \ldots, i_d) \prod_{k=2}^{d} \chi_{i_k}(x_k) + \sum_{i_2,\ldots,i_d \in \{0,1\}^{d-1}} \chi_1(r_1) a(1, \ldots, i_d) \prod_{k=2}^{d} \chi_{i_k}(x_k)$$

$$G = \sum_{i_2,\ldots,i_d \in \{0,1\}^{d-1}} (1-r_1) a(0, \ldots, i_d) \prod_{k=2}^{d} \chi_{i_k}(x_k) + \sum_{i_2,\ldots,i_d \in \{0,1\}^{d-1}} r_1 a(1, \ldots, i_d) \prod_{k=2}^{d} \chi_{i_k}(x_k)$$

D'après la définition de la fonction $\chi_{i_k}$ on obtient

$$G = \tilde{a}(r_1, x_2, \ldots, x_d) = \tilde{a}(0, x_2, \ldots, x_d)(1-r_1) + \tilde{a}(1, x_2, \ldots, x_d) r_1$$

On constate donc que l'évaluation du polynôme $p_2$ en 0 ou en 1 peut être faite directement à partir de la valeur de $r_1$ et des valeurs des polynômes $\tilde{a}$ et $\tilde{b}$, qui se trouvent initialement dans les tableaux A et B.

Pour l'évaluation du polynôme $p_2$ en la troisième valeur de t, le même type de raisonnement permet d'obtenir une expression qui n'utilise que des valeurs stockées dans les tableaux A et B :

$$\tilde{a}(r_1, t, x_3, \ldots, x_d)$$
$$= (1-t)\big((1-r_1)\tilde{a}(0,0, x_3, \ldots, x_d) + r_1 \tilde{a}(1,0, x_3, \ldots, x_d)\big)$$
$$+ t\big((1-r_1)\tilde{a}(0,1, x_3, \ldots, x_d) + r_1 \tilde{a}(1,1, x_3, \ldots, x_d)\big)$$

Plus généralement, pour tout j compris entre 2 et d-1, l'évaluation du polynôme $p_j$ peut être calculée rapidement en fonction de la valeur de $r_{j-1}$, de t et des valeurs $\tilde{a}(r_1, \ldots r_{j-2}, x_{j-1}, \ldots x_d)$ et $\tilde{b}(r_1, \ldots r_{j-2}, x_{j-1}, \ldots x_d)$ obtenues à l'itération précédente, et qui sont enregistrées à chaque itération par l'entité de preuve dans les tableaux A et B mis à jour. On note $A^{(j)}$ et $B^{(j)}$ la version mise à jour à l'itération j des tableaux A et B.

Par conséquent, lors de chaque itération de la phase d'échange du protocole Sumcheck, avec j compris entre 2 et d,

- l'entité de preuve P dispose pour chaque polynôme $\tilde{a}$, $\tilde{b}$ d'un tableau $A^{(j)}$, $B^{(j)}$ comprenant respectivement toutes les valeurs possibles des fonctions $\tilde{a}(r_1, \ldots r_{j-2}, x_{j-1}, \ldots x_d)$ et $\tilde{b}(r_1, \ldots r_{j-2}, x_{j-1}, \ldots x_d)$ pour $(x_{j-1}, \ldots x_d) \in \{0,1\}^{d-j+1}$, où les valeurs $r_1, \ldots, r_{j-1}$ sont les valeurs générées aléatoirement par l'entité de vérification V et transmises à l'entité de preuve P lors d'une itération j,

- l'évaluation d'un polynôme $p_j$ en une valeur t est mise en oeuvre à partir des valeurs t, $r_{j-1}$ et des valeurs des tableaux $A^{(j)}$, $B^{(j)}$, et

- l'entité de preuve P incrémente les tableaux $A^{(j+1)}$, $B^{(j+1)}$ pour l'itération j+1 en remplaçant leurs valeurs par toutes les valeurs possibles $\tilde{a}(r_1, \ldots r_{j-1}, x_j, \ldots x_d)$ et $\tilde{b}(r_1, \ldots r_{j-1}, x_j, \ldots x_d)$ pour $(x_j, \ldots x_d) \in \{0,1\}^{d-j}$.

Le coût total pour l'implémentation du protocole par l'entité de preuve P est en O($2^d$)= O(n).

*Cas du calcul d'un produit scalaire avec plusieurs données de référence*

Dans le cas où l'entité de preuve P réalise une identification biométrique de l'individu, elle peut calculer une distance entre la donnée biométrique candidate et chacune d'une pluralité de données biométriques de référence. Comme indiqué ci-avant, ce cas est de préférence mis en oeuvre avec la deuxième unité de traitement 20 comme entité de preuve, et la première unité de traitement 10 comme entité de vérification V. Alors la première unité de traitement 10 aura préalablement communiqué la donnée biométrique candidate a à la deuxième unité de traitement 20.

Avantageusement, dans le cas d'une identification où le calcul de la distance comprend celui d'un produit scalaire entre la donnée candidate et chaque donnée de référence, la vérification est de préférence mise en oeuvre simultanément sur l'ensemble des calculs de distance et les étapes décrites ci-avant sont mises en oeuvre à l'identique en regroupant les données de référence en une matrice.

Ainsi, en notant m le nombre de données biométriques de référence, où m est un entier strictement supérieur à 1, M une matrice de n lignes et m colonnes qui représente toutes les données biométriques de référence, $f_a$ une fonction qui à une valeur d'indice i associe la composante d'indice i de la donnée candidate a, et M(j,i) une fonction qui à un couple d'indices (j,i) associe la valeur de $M_{j,i}$, le produit scalaire q entre la donnée candidate et chaque donnée de référence se note :

$$\forall i \epsilon \{1, \ldots, m\}, q(i) = \sum_{j=1}^{n} f_a(j)M(j,i)$$

Lors de la sous-étape 211, en notant $d = \max(log_2 n, log_2 m)$, les indices des composantes de la donnée biométrique candidate et de la matrice des données de référence peuvent être reformulés en binaire. Le produit scalaire se réécrit alors comme suit :

$$\forall (i_1, \ldots, i_d) \epsilon \{0,1\}^d, q(i_1, \ldots, i_d) = \sum_{j_1, \ldots j_d \epsilon \{0,1\}^d} f_a(j_1, \ldots, j_d) . M(j_1, \ldots, j_d, i_1, \ldots, i_d)$$

La sous-étape 212 d'extension des fonctions $f_a$ et M à $\mathbb{F}^d$ où $\mathbb{F}$ est un corps fini peut également être mise en oeuvre mutatis mutandis. En notant ã et $\tilde{M}$ les extensions respectives de $f_a$ et M sur le corps $\mathbb{F}^d$ la relation précédente devient alors :

$$\forall (x_1, \ldots, x_d) \epsilon \mathbb{F}^d, \tilde{q}(x_1, \ldots, x_d) = \sum_{j_1, \ldots j_d \in \{0,1\}^d} \tilde{a}(j_1, \ldots, j_d) . \tilde{M}(j_1, \ldots, j_d, x_1, \ldots, x_d)$$

Lors de la sous-étape 213, le polynôme p correspondant aux produits scalaires et coïncidant avec les produits scalaires sur les données biométriques sur $\{0,1\}^d$ est :

$$p_{(x_1, \ldots, x_d)}(j_1, \ldots, j_d) = \tilde{a}(j_1, \ldots, j_d) . \tilde{M}(j_1, \ldots, j_d, x_1, \ldots, x_d)$$

Lors de l'étape 220, l'entité de preuve P envoie à l'entité de vérification V les données de références, ainsi que le résultat q du produit scalaire entre la donnée biométrique et la matrice des données de référence M : $\forall i \epsilon \{1, \ldots, m\}$, $q(i) = \sum_{j=1}^{n} f_a(j)M(j,i)$.

Avant la mise en oeuvre du protocole Sumcheck, l'entité de vérification V calcule une extension $\tilde{q}$ de q sur le corps $\mathbb{F}^d$, et génère aléatoirement un vecteur r=($r_1, \ldots r_d$) dans $\mathbb{F}^d$ qu'elle communique à l'entité de preuve. L'entité de preuve P envoie alors à l'entité de vérification la valeur $\tilde{q}(r)$.

Puis, le protocole Sumcheck est mis en oeuvre à l'identique en remplaçant le polynôme p ci-avant dans le protocole par $p_{(r_1, \ldots r_d)}(j_1, \ldots j_d)$, pour vérifier l'exactitude de la valeur de $\tilde{q}(r)$, la vérification finale ne nécessitant que la connaissance des fonctions $\tilde{a}$ et $\tilde{M}$. A l'issue du protocole, le fait que la valeur de $\tilde{q}$ évalué en une donnée générée aléatoirement par l'entité de vérification ait été vérifiée par l'entité de vérification permet de prouver que le calcul du produit scalaire entre les données biométrique et de référence est exact.

Le procédé proposé ci-avant permet d'exploiter le protocole Sumcheck à la vérification d'une authentification ou d'une identification biométrique. Le rôle joué par l'entité de preuve dans l'implémentation de ce protocole ne nécessite pas de capacité de calculs importantes, ce qui est bien adapté à une implémentation par un dispositif personnel à un individu tel qu'un téléphone mobile.

## Revendications

1. Procédé de traitement de données biométriques, comprenant la vérification (200) du résultat d'un calcul de distance entre une donnée biométrique candidate (a) et au moins une donnée biométrique de référence (b) comprenant chacune un nombre n de composantes indexées ($a_i$, $b_i$), ledit calcul de distance comprenant celui d'un polynôme en les composantes des données biométriques,

   le procédé étant mis en oeuvre par une entité de preuve (P) et une entité de vérification (V), chaque entité étant une unité de traitement comprenant des moyens de traitement (11, 21) et de communication (12, 22) avec l'autre entité, le procédé comprenant des étapes au cours desquelles :

   - l'entité de preuve (P) communique (220) à l'entité de vérification (V) le résultat du calcul de la distance entre les données biométriques candidate et de référence, ainsi que lesdites données,
   - l'entité de preuve (P) génère (211) à partir de chaque donnée une fonction d'un nombre d de variables $f_a(i_1,...,i_d)$, $f_b(i_1,...,i_d)$ où $d=\log_2 n$, définie pour chaque variable sur l'ensemble $\{0,1\}$, par reformulation de l'indice i de chaque composante ($a_i$, $b_i$) en format binaire,
   - l'entité de preuve (P) génère (212) à partir de chaque fonction un polynôme de d variables $\tilde{a}(x_1,...x_d)$, $\hat{b}(x_1,...x_d)$ défini sur $\mathbb{F}^d$ où $\mathbb{F}$ est un corps fini, tel que chaque polynôme $\tilde{a}$, $\hat{b}$ coïncide avec la fonction correspondante $f_a, f_b$ sur l'ensemble $\{0,1\}^d$, et génère (213) à partir des polynômes $\tilde{a}$, $\hat{b}$ un polynôme $p(x_1,...,x_d)$ de d variables de même expression que celui de la distance entre les données, et
   - l'entité de preuve (P) et l'entité de vérification (V) s'engagent dans un protocole Sumcheck (230) appliqué au polynôme p pour vérifier le résultat du calcul de la distance entre les données.

2. Procédé selon la revendication 1, dans lequel le calcul de distance comprend celui d'un produit scalaire, et le polynôme p comprend au moins un terme g égal à un produit scalaire entre les polynômes $\tilde{a}$ et $\hat{b}$ :

$$g(x_1,...,x_d) = \tilde{a}(x_1,...,x_d).\tilde{b}(x_1,...,x_d).$$

3. Procédé selon la revendication 2, dans lequel la distance calculée est le carré de la distance euclidienne, et le polynôme p s'écrit :

$$p(x_1,...,x_d) = \tilde{a}(x_1,...,x_d).\tilde{a}(x_1,...,x_d) + \tilde{b}(x_1,...,x_d).\tilde{b}(x_1,...,x_d) - 2g(x_1,...,x_d).$$

4. Procédé selon la revendication 2, dans lequel la distance calculée est la distance de Hamming, et le polynôme p s'écrit :

$$p(x_1,...,x_d) = \tilde{a}(x_1,...,x_d) + \tilde{b}(x_1,...,x_d) - 2g(x_1,...,x_d).$$

5. Procédé selon l'une des revendications précédentes, dans lequel la donnée biométrique candidate et la ou les données biométriques de référence sont initialement détenues par l'entité de preuve (P), et le procédé comprend une étape préliminaire de masquage (105), par l'entité de preuve (P), des données biométriques, ledit masquage comprenant la génération aléatoire d'une permutation circulaire et d'un vecteur de n composantes, et la mise en oeuvre d'une somme ou de l'opération « ou exclusif » entre chaque donnée permutée par la permutation circulaire et le vecteur généré aléatoirement.

6. Procédé selon l'une des revendications précédentes, dans lequel chaque polynôme $\tilde{a}(x_1,...x_d)$ et $\hat{b}(x_1,...x_d)$ est de degré un en chaque variable.

**7.** Procédé selon la revendication 6, dans lequel le polynôme $\tilde{a}(x_1,...x_d)$ est défini par :

$$\forall x \in \mathbb{F}^d, \tilde{a}(x) = \sum_{i=(i_1,...,i_d)\in\{0,1\}^d} a(i)\chi_i(x)$$

avec :

$$\chi_v(x_1,...,x_d) = \prod_{k=1}^{d} \chi_{v_k}(x_k)$$

et où la fonction $\chi_{v_k}(x_k)$ est définie, pour $x_k \in \{0,1\}$, par :

$$\begin{cases} \chi_{v_k}(x_k) = 1 - x_k \ si \ v_k = 0 \\ \chi_{v_k}(x_k) = x_k \ si \ v_k = 1 \end{cases}.$$

**8.** Procédé selon l'une des revendications 6 et 7 en combinaison avec l'une des revendications 2 à 4, dans lequel la mise en oeuvre du protocole Sumcheck comprend directement la génération par l'entité de preuve (P) à partir du polynôme p de j polynômes $p_j$ d'une seule variable, et la transmission à l'entité de vérification (V) d'évaluations de chaque polynôme $p_j$ en trois points pour que l'entité de vérification (V) puisse ensuite interpoler le polynôme $p_j$.

**9.** Procédé selon la revendication 8, dans lequel pour chacun des polynômes $p_j$, j = 1 à d-1, l'entité de preuve (P) envoie les évaluations de ces polynômes en 0, en 1, et en une troisième valeur t.

**10.** Procédé selon la revendication 9, dans lequel, la mise en oeuvre du protocole Sumcheck comprend une série d'itérations pour j compris entre 2 et d-1 au cours desquelles l'entité de vérification (V) génère aléatoirement et communique à l'entité de preuve une valeur $r_{j-1}$, et l'entité de preuve (P) génère un polynôme :

$$p_j(X_j) = \sum_{x_{j+1}\in\{0,1\}...x_d\in\{0,1\}} p(r_1,...,r_{j-1},X_j,x_{j+1},...,x_d)$$

et, à chaque itération,

- l'entité de preuve (P) dispose pour chaque polynôme $\tilde{a}$, $\tilde{b}$ d'un tableau $A^{(j)}$, $B^{(j)}$ comprenant respectivement toutes les valeurs possibles des fonctions $\tilde{a}(r_1,...r_{j-2}, x_{j-1},...x_d)$ et $\tilde{b}(r_1,...r_{j-2}, x_{j-1},...x_d)$ pour $(x_{j-1}...x_d) \in \{0,1\}^{d-j+1}$, où chaque valeur $r_k$ (k=1,...,j-2) a été générée aléatoirement par l'entité de vérification et transmise à l'entité de preuve lors des itérations précédentes,
- l'évaluation d'un polynôme $p_j$ en une valeur t est mise en oeuvre par l'entité de preuve (P) à partir des valeurs t, $r_{j-1}$ et des valeurs des tableaux $A^{(j)}$, $B^{(j)}$, et
- l'entité de preuve (P) incrémente les tableaux $A^{(j+1)}$, $B^{(j+1)}$ pour l'itération j+1 en remplaçant leurs valeurs par toutes les valeurs possibles $\tilde{a}(r_1,...r_{j-1}, x_j...x_d)$ et $\tilde{b}(r_1,...r_{j-1}, x_j...x_d)$ pour $(x_j...x_d) \in \{0,1\}^{d-j}$,

les tableaux étant initialisés pour le polynôme $p_2$ en comprenant toutes les valeurs possibles des polynômes $\tilde{a}$, $\tilde{b}$ sur l'ensemble $\{0,1\}^d$.

**11.** Procédé selon l'une des revendications 2 à 10, comprenant la vérification du résultat du calcul d'un produit scalaire entre une donnée biométrique candidate et chacune d'un nombre m de données biométriques de référence, dans lequel les données biométriques de référence sont réunies en une matrice M de taille (n,m) de sorte que les produits scalaires sont obtenus par le produit du vecteur candidat et de la matrice, et, le protocole Sumcheck est mis en oeuvre sur un polynôme $p_{(r_1,...r_d)}(j_1,...j_d)$ tel que :

$$p_{(r_1,\ldots,r_d)}(j_1,\ldots,j_d) = \sum_{j_1,\ldots j_d \epsilon \{0,1\}^d} \tilde{a}(j_1,\ldots,j_d).\tilde{M}(j_1,\ldots,j_d,r_1,\ldots,r_d)$$

où $(r_1,\ldots,r_d)$ est un vecteur dont les composantes sont générées aléatoirement par l'entité de vérification (V).

12. Procédé d'authentification ou d'identification biométrique d'un individu, comprenant :

- la comparaison, par une entité de preuve (P), d'une donnée biométrique acquise sur un trait biométrique d'un individu à au moins une donnée biométrique de référence par calcul entre lesdites données d'une distance (100), et
- la mise en oeuvre du procédé selon l'une des revendications qui précèdent pour la vérification du résultat de la comparaison.

13. Procédé d'authentification selon la revendication précédente, dans lequel l'entité de preuve (P) est un dispositif électronique (10) personnel à l'individu de type téléphone, ordinateur personnel ou tablette numérique comprenant un calculateur (11), un capteur d'images (14), et un module (16) d'acquisition d'une donnée biométrique de référence contenue dans un document d'identité.

14. Produit programme d'ordinateur, comprenant des instructions de code pour l'exécution d'un procédé comprenant des étapes de :

- acquisition d'une image et conversion de ladite image en une donnée biométrique comprenant n composantes,
- acquisition d'une donnée biométrique de référence enregistrée dans un document d'identité, la donnée comprenant n composantes,
- comparaison des deux données par calcul d'une distance entre les deux données comprenant le calcul d'un polynôme en les composantes des données,
- communication du résultat et desdites données à une entité de vérification,
- génération à partir de chaque composante $a_i$, $b_i$ de chaque donnée d'une fonction d'un nombre d de variables $a(i_1,\ldots,i_d)$, $b(i_1,\ldots,i_d)$ où $d=\log_2 n$, définie pour chaque variable sur l'ensemble $\{0,1\}$, par reformulation de l'indice i de la composante $a_i$, $b_i$ en format binaire,
- génération, à partir de chaque fonction, d'un polynôme de d variables $\tilde{a}(x_1,\ldots x_d)$ $\hat{b}(x_1,\ldots x_d)$ défini sur un corps fini, tel que chaque polynôme $\tilde{a}$, $\hat{b}$ coïncide avec la fonction correspondante a,b sur l'ensemble $\{0,1\}^d$, et génération, à partir des polynômes $\tilde{a}$ et $\hat{b}$ d'un polynôme $p(x_1,\ldots,x_d)$ de d variables de même expression que celui de la distance entre les données,
- engagement, avec l'entité de vérification, dans un protocole de vérification Sumcheck appliqué au polynôme p,

lorsque ledit programme est exécuté sur un ordinateur.

**Patentansprüche**

1. Verfahren zur Verarbeitung biometrischer Angaben, umfassend die Überprüfung (200) des Ergebnisses einer Abstandsberechnung zwischen einer biometrischen Kandidatenangabe (a) und mindestens einer biometrischen Referenzangabe (b), umfassend jeweils eine Anzahl n von Indexkomponenten $(a_i, b_i)$, wobei die Abstandsberechnung die Berechnung eines Polynoms aus den Komponenten der biometrischen Angaben umfasst, wobei das Verfahren von einer Beweisentität (P) und einer Überprüfungsentität (V) durchgeführt wird, wobei jede Entität eine Verarbeitungseinheit ist, die Verarbeitungs- (11, 21) und Kommunikationsmittel (12, 22) mit der anderen Entität umfasst, wobei das Verfahren Schritte umfasst, bei denen:

- die Beweisentität (P) an die Überprüfungsentität (V) die Ergebnisse der Berechnung des Abstands zwischen den biometrischen Kandidaten- und Referenzangaben kommuniziert (220), sowie die Angaben,
- die Beweisentität (P) auf der Basis jeder Angabe eine Funktion einer Anzahl d von Variablen $f_a(i_1,\ldots,i_d)$, $f_b(i_1,\ldots,i_d)$ generiert (211), wobei $d=\log_2 n$ ist, definiert für jede Variable für die Einheit $\{0,1\}$ durch Neufassung des Indizes i jeder Komponente $(a_i, b_i)$ in binärem Format,
- die Beweisentität (P) auf der Basis jeder Funktion ein Polynom von d Variablen $\tilde{a}(x_1,\ldots x_d)$, $\hat{b}(x_1,\ldots x_d)$ generiert

(212), definiert für $\mathbb{F}^d$, wobei $\mathbb{F}$ ein endlicher Körper ist, so dass jedes Polynom $\tilde{a}$, $\hat{b}$ mit der entsprechenden

Funktion $f_a, f_b$ für die Einheit $\{0,1\}^d$ übereinstimmt und auf der Basis der Polynome $\tilde{a}$, $\hat{b}$ ein Polynom $p(x_1,...,x_d)$ von d Variablen derselben Expression wie das des Abstands zwischen den Angaben generiert (213), und
- die Beweisentität (P) und die Überprüfungsentität (V) in ein Sumcheck-Protokoll (230) einfließen, das auf das Polynom p angewendet wird, um das Ergebnis der Berechnung des Abstands zwischen den Angaben zu überprüfen.

2. Verfahren nach Anspruch 1, wobei die Abstandsberechnung die Berechnung eines Skalarprodukts umfasst, und das Polynom p mindestens einen Term g gleich einem Skalarprodukt zwischen den Polynomen $\tilde{a}$ und $\hat{b}$ umfasst:

$$g(x_1, ..., x_d) = \tilde{a}(x_1, ..., x_d) . \tilde{b}(x_1, ..., x_d).$$

3. Verfahren nach Anspruch 2, wobei der berechnete Abstand das Quadrat des euklidischen Abstands ist, und das Polynom p lautet:

$$p(x_1, ..., x_d) = \tilde{a}(x_1, ..., x_d) . \tilde{a}(x_1, ..., x_d) + \tilde{b}(x_1, ..., x_d) . \tilde{b}(x_1, ..., x_d)$$
$$- 2g(x_1, ..., x_d).$$

4. Verfahren nach Anspruch 2, wobei der berechnete Abstand der Hamming-Abstand ist, und das Polynom p lautet:

$$p(x_1, ..., x_d) = \tilde{a}(x_1, ..., x_d) + \tilde{b}(x_1, ..., x_d) - 2g(x_1, ..., x_d).$$

5. Verfahren nach einem der vorangehenden Ansprüche, wobei die biometrische Kandidatenangabe und die biometrische Referenzangabe(n) zunächst von der Beweisentität (P) verwahrt werden, und das Verfahren einen vorherigen Maskierungsschritt (105) durch die Beweisentität (P) der biometrischen Referenzangaben umfasst, wobei die Maskierung die zufallsbedingte Generierung einer zirkulären Permutation und eines Vektors von n Komponenten, und die Durchführung einer Summe oder der Operation "exklusives oder" zwischen jeder durch die zirkuläre Permutation permutierten Angabe und dem zufallsbedingt generierten Vektor umfasst.

6. Verfahren nach einem der vorangehenden Ansprüche, wobei jedes Polynom $\tilde{a}(x_1,...x_d)$ und $\hat{b}(x_1,...x_d)$ den Grad Eins in jeder Variablen hat.

7. Verfahren nach Anspruch 6, wobei das Polynom $\tilde{a}(x_1,...x_d)$ bestimmt ist durch:

$$\forall x \in \mathbb{F}^d, \tilde{a}(x) = \sum_{i=(i_1,...,i_d)\in\{0,1\}^d} a(i)\chi_i(x)$$

mit:

$$\chi_v(x_1, ..., x_d) = \prod_{k=1}^{d} \chi_{v_k}(x_k)$$

und wobei die Funktion $\chi_{v_k}(x_k)$ bestimmt ist, für $x_k \in \{0,1\}$, durch:

$$\begin{cases} \chi_{v_k}(x_k) = 1 - x_k \ wenn \ v_k = 0 \\ \chi_{v_k}(x_k) = x_k \ wenn \ v_k = 1 \end{cases}.$$

8. Verfahren nach einem der Ansprüche 6 und 7 in Kombination mit einem der Ansprüche 2 bis 4, wobei die Durchführung des Sumcheck-Protokolls direkt die Generierung durch die Beweisentität (P) auf der Basis des Polynoms p von j Polynomen $p_j$ einer einzigen Variablen, und die Übertragung an die Überprüfungsentität (V) von Bewertungen jedes Polynoms $p_j$ in drei Punkten umfasst, damit die Überprüfungsentität (V) dann das Polynom $p_j$ interpolieren kann.

9. Verfahren nach Anspruch 8, wobei für jedes der Polynome $p_j$, j=1 bis d-1, die Beweisentität (P) die Bewertungen dieser Polynome in 0, in 1, und in einem dritten Wert t sendet.

10. Verfahren nach Anspruch 9, wobei die Durchführung des Sumcheck-Protokolls eine Reihe von Iterationen für j zwischen 2 und d-1 inklusive umfasst, bei denen die Überprüfungsentität (V) einen Wert $r_{j-1}$ zufallsbedingt generiert und an die Beweisentität kommuniziert, und die Beweisentität (P) ein Polynom generiert:

$$p_j(X_j) = \sum_{x_{j+1}\in\{0,1\}...x_d\in\{0,1\}} p(r_1,...,r_{j-1},X_j,x_{j+1},...,x_d)$$

und, bei jeder Iteration,

- die Beweisentität (P) für jedes Polynom $\hat{a}$, $\tilde{b}$ über eine Tabelle $A^{(j)}$, $B^{(j)}$ verfügt, umfassend jeweils alle möglichen Werte der Funktionen $\tilde{a}(r_1,...r_{j-2}, x_{j-1},...x_d)$ und $\tilde{b}(r_1,...r_{j-2}, x_{j-1},...x_d)$ für $(x_{j-1}...x_d) \in \{0,1\}^{d-j+1}$, wobei jeder Wert $r_k$ (k=1,...,j-2) von der Überprüfungsentität zufallsbedingt generiert und an die Beweisentität bei vorherigen Iterationen übertragen wurde,
- die Bewertung eines Polynoms $p_j$ in einen Wert t von der Beweisentität (P) auf der Basis der Werte t, $r_{j-1}$ und der Werte der Tabellen $A^{(j)}$, $B^{(j)}$ durchgeführt wird, und
- die Beweisentität (P) die Tabellen $A^{(j+1)}$, $B^{(j+1)}$ für die Iteration j+1 durch Ersetzen ihrer Werte durch alle möglichen Werte $\tilde{a}(r_1,...r_{j-1}, x_j...x_d)$ und $\tilde{b}(r_1,...r_{j-1}, x_j...x_d)$ für $(x_j...x_d) \in \{0,1\}^{d-j}$ inkrementiert,

wobei die Tabellen für das Polynom $p_2$ initialisiert sind, indem sie alle möglichen Werte der Polynome $\tilde{a}$, $\tilde{b}$ für die Einheit $\{0,1\}^d$ umfassen.

11. Verfahren nach einem der Ansprüche 2 bis 10, umfassend die Überprüfung des Ergebnisses der Berechnung eines Skalarprodukts zwischen einer biometrischen Kandidatenangabe und jeder Angabe einer Anzahl m biometrischer Referenzangaben, wobei die biometrischen Referenzangaben in einer Matrix M der Größe (n,m) derart zusammengefasst sind, dass die Skalarprodukte durch das Produkt des Kandidatenvektors und der Matrix erhalten werden, und das Sumcheck-Protokoll auf ein Polynom $p_{(r_1,...,r_d)}(j_1,...,j_d)$ derart angewendet wird, dass:

$$p_{(r_1,...,r_d)}(j_1,...,j_d) = \sum_{j_1,...j_d\in\{0,1\}^d} \tilde{a}(j_1,...,j_d).\tilde{M}(j_1,...,j_d,r_1,...,r_d)$$

wobei $(r_1,...,r_d)$ ein Vektor ist, dessen Komponenten von der Überprüfungsentität (V) zufallsbedingt generiert werden.

12. Biometrisches Authentifizierungs- oder Identifizierungsverfahren eines Individuums, umfassend:

- das Vergleichen, durch eine Beweisentität (P), einer biometrischen Angabe, erfasst auf einer biometrischen Linie eines Individuums, mit mindestens einer biometrischen Referenzangabe durch Berechnung eines Abstands (100) zwischen den Referenzangaben, und
- das Durchführen des Verfahren nach einem der vorangehenden Ansprüche für die Überprüfung des Ergebnisses des Vergleichs.

13. Authentifizierungsverfahren nach vorangehendem Anspruch, wobei die Beweisentität (P) eine persönliche elektronische Vorrichtung (10) des Individuums vom Typ Telefon, persönlicher Rechner oder digitales Tablet ist, umfassend einen Rechner (11), einen Bildsensor (14) und ein Erfassungsmodul (16) einer biometrischen Referenzangabe, die in einem Identitätsdokument enthalten ist.

14. Rechnerprogrammprodukt, umfassend Codebefehle für die Ausführung eines Verfahrens, umfassend die Schritte:

- Erfassen eines Bildes und Umwandeln des Bildes in eine biometrische Angabe, umfassend n Komponenten,

- Erfassen einer biometrischen Referenzangabe, die in einem Identitätsdokument gespeichert ist, wobei die Angabe n Komponenten umfasst,
- Vergleichen der zwei Angaben durch Berechnung eines Abstands zwischen den zwei Angaben, umfassend die Berechnung eines Polynoms aus den Komponenten der Angaben,
- Kommunizieren des Ergebnisses und der Angaben an eine Überprüfungsentität,
- Generieren, auf der Basis jeder Komponente $a_i$, $b_i$ jeder Angabe, einer Funktion einer Anzahl d von Variablen $a(i_1,...,i_d)$, $b(i_1,...,i_d)$, wobei $d=\log_2 n$, definiert für jede Variable für die Einheit {0,1} durch Neufassung des Indizes i der Komponente $a_i$, $b_i$ in binärem Format,
- Generieren, auf der Basis jeder Funktion, eines Polynoms von d Variablen $\tilde{a}(x_1,...x_d)$ $\hat{b}(x_1,...x_d)$, definiert auf einem endlichen Körper, so dass jedes Polynom $\tilde{a}$, $\hat{b}$ mit der entsprechenden Funktion a,b für die Einheit ${0,1}^d$ übereinstimmt, und Generieren, auf der Basis der Polynome $\tilde{a}$ und $\hat{b}$ eines Polynoms $p(x_1,...,x_d)$ von d Variablen derselben Expression wie das des Abstands zwischen den Angaben,
- Einfließen, mit der Überprüfungsentität, in ein auf das Polynom p angewendetes Sumcheck-Überprüfungsprotokoll,

wenn das Programm auf einem Rechner ausgeführt wird.

## Claims

1. A method for processing biometric data, comprising verification (200) of the result of calculation of distance between a biometric candidate datum (a) and at least one biometric reference datum (b) each comprising a number n of indexed components ($a_i$, $b_i$), said calculation of distance comprising that of a polynomial of the components of the biometric data,

   the method being executed by a proving entity (P) and a verification entity (V), each entity being a processing unit comprising processing (11, 21) and communication (12, 22) means with the other entity, the method comprising steps during which:

   - the proving entity (P) communicates (220) to the verification entity (V) the result of calculation of the distance between the candidate and reference biometric data, and said data,
   - the proving entity (P) generates (211) from each datum a function of a number d of variables $f_a(i_1,...,i_d)$, $f_b(i_1,...,i_d)$ where $d=\log_2 n$, defined for each variable on the set {0,1}, by reformulation of the index i of each component ($a_i$, $b_i$) in binary format,

   - the proving entity (P) generates (212) from each function a polynomial of d variables $\tilde{a}(x_1,...x_d)$, $\hat{b}(x_1,...x_d)$

   defined on $\mathbb{F}^d$ where $\mathbb{F}$ is a finite field, such that each polynomial $\tilde{a}$, $\hat{b}$ coincides with the corresponding function $f_a$, $f_b$ on the set ${0,1}^d$, and generates (213) from the polynomials $\tilde{a}$, $\hat{b}$ a polynomial $p(x_1,...,x_d)$ of d variables of the same expression as that of the distance between the data, and
   - the proving entity (P) and the verification entity (V) engage in a Sumcheck protocol (230) applied to the polynomial p to verify the result of the calculation of the distance between the data.

2. The method according to claim 1, wherein calculation of distance comprises that of a scalar product, and the polynomial p comprises at least one term g equal to a scalar product between the polynomials $\tilde{a}$ and $\hat{b}$:

$$g(x_1, ..., x_d) = \tilde{a}(x_1, ..., x_d) . \tilde{b}(x_1, ..., x_d).$$

3. The method according to claim 2, wherein the calculated distance is the square of the Euclidian distance, and the polynomial p is written as:

$$p(x_1, ..., x_d) = \tilde{a}(x_1, ..., x_d) . \tilde{a}(x_1, ..., x_d) + \tilde{b}(x_1, ..., x_d) . \tilde{b}(x_1, ..., x_d)$$
$$- 2g(x_1, ..., x_d).$$

4. The method according to claim 2, wherein the calculated distance is the Hamming distance, and the polynomial p is written as:

$$p(x_1, \dots, x_d) = \tilde{a}(x_1, \dots, x_d) + \tilde{b}(x_1, \dots, x_d) - 2g(x_1, \dots, x_d).$$

5. The method according to any one of the preceding claims, wherein the biometric candidate datum and the biometric reference datum or the biometric reference data are initially retained by the proving entity (P), and the method comprises a preliminary step of masking (105), by the proving entity (P), biometric data, said masking comprising the random generation of a circular permutation and a vector of n components, and performing a sum or the operation "exclusive or" between each datum permutated by the circular permutation and the randomly generated vector.

6. The method according to any one of the preceding claims, wherein each polynomial $\tilde{a}(x_1, \dots x_d)$ and $\hat{b}(x_1, \dots x_d)$ is of degree one in each variable.

7. The method according to claim 6, wherein the polynomial $a(x_1, \dots x_d)$ is defined by:

$$\forall x \in \mathbb{F}^d, \tilde{a}(x) = \sum_{i=(i_1, \dots, i_d) \in \{0,1\}^d} a(i) \chi_i(x)$$

with:

$$\chi_v(x_1, \dots, x_d) = \prod_{k=1}^{d} \chi_{v_k}(x_k)$$

and where the function $\chi_{v_k}(x_k)$ is defined, for $x_k \in \{0,1\}$, by:

$$\begin{cases} \chi_{v_k}(x_k) = 1 - x_k \ if \ v_k = 0 \\ \chi_{v_k}(x_k) = x_k \ if \ v_k = 1 \end{cases}.$$

8. The method according to any one of claims 6 and 7 in combination with any one of claims 2 to 4, wherein the application of the Sumcheck protocol directly comprise generating by the proving entity (P) from the polynomial p of j polynomials $p_j$ of a single variable, and transmitting to the verification entity (V) evaluations of each polynomial $p_j$ in three points so that the verification entity (V) can then interpolate the polynomial $p_j$.

9. Method according to claim 8, wherein for each polynomial $p_j$, j=1 to d-1, the proving entity (P) transmits the evaluations of these polynomials in 0, in 1, and in a third value t.

10. The method according to claim 9, wherein the application of the Sumcheck protocol comprises a series of iterations for j from 2 to d-1 during which the verification entity (V) randomly generates and communicates to the proving entity a value $r_{j-1}$, and the proving entity (P) generates a polynomial:

$$p_j(X_j) = \sum_{x_{j+1} \in \{0,1\} \dots x_d \in \{0,1\}} p(r_1, \dots, r_{j-1}, X_j, x_{j+1}, \dots, x_d)$$

and, at each iteration,

- the proving entity (P) has for each polynomial $\tilde{a}$, $\tilde{b}$ a table $A^{(j)}$, $B^{(j)}$ comprising respectively all the possible values of the functions $\tilde{a}(r_1, \dots r_{j-2}, x_{j-1}, \dots x_d)$ and $\tilde{b}(r_1, \dots r_{j-2}, x_{j-1}, \dots x_d)$ for $(x_{j-1}, \dots x_d) \in \{0,1\}^{d-j+1}$, where each value $r_k$ (k=1,...,j-2) has been generated randomly by the verification entity and sent to the proving entity during the preceding iterations,
- evaluation of a polynomial $p_j$ in a value t is performed by the proving entity (P) from the values t, $r_{j-1}$ and the values of the tables $A^{(j)}$, $B^{(j)}$, and
- the proving entity (P) increments the tables $A^{(j+1)}$, $B^{(j+1)}$ for the iteration j+1 by replacing their values by all the

possible values $\tilde{a}(r_1,...r_{j-1}, x_j...x_d)$ and $\tilde{b}(r_1,...r_{j-1}, x_j...x_d)$ for $(x_j...x_d) \in \{0,1\}^{d-j}$,

the tables being initialised for the polynomial $p_2$ by comprising all the possible values of the polynomials $\tilde{a}, \tilde{b}$ on the set $\{0,1\}^d$.

11. The method according to any one of claims 2 to 10, comprising verification of the result of calculation of a scalar product between a biometric candidate datum and each of a number m of biometric reference data, wherein the biometric reference data are combined into a matrix M of size (n,m) such that the scalar products are obtained by the product of the candidate vector and of the matrix, and the Sumcheck protocol is executed on a polynomial $p_{(r_1,...,r_d)}(j_1,...,j_d)$ such that:

$$p_{(r_1,...,r_d)}(j_1,...,j_d) = \sum_{j_1,...j_d \in \{0,1\}^d} \tilde{a}(j_1,...,j_d).\widetilde{M}(j_1,...,j_d,r_1,...,r_d)$$

where $(r_1,...,r_d)$ is a vector whereof the components are generated randomly by the verification entity (V).

12. A method of authentication or biometric identification of an individual, comprising:

- comparison, by a proving entity (P), of a biometric datum acquired on a biometric trait of an individual to at least one biometric reference datum by calculation between said data of a distance (100), and
- execution of the method according to any one of the preceding claims for verification of the result of the comparison.

13. The authentication method according to the preceding claim, wherein the proving entity (P) is an electronic device (10) personal to the individual of telephone type, personal computer or digital tablet comprising a computer (11), an image sensor (14), and a module (16) for acquisition of a biometric reference datum contained in an identity document.

14. A computer program product, comprising code instructions for execution of a method comprising steps of:

- acquisition of an image and conversion of said image into a biometric datum comprising n components,
- acquisition of a biometric reference datum recorded in an identity document, the datum comprising n components,
- comparison of the two data by calculation of a distance between the two data comprising calculation of a polynomial of the components of the data,
- communication of the result and of said data to a verification entity,
- generation from each component $a_i$, $b_i$ of each datum of a function of a number d of variables $a(i_1,...,i_d)$, $b(i_1,...,i_d)$ where $d=\log_2 n$, defined for each variable on the set $\{0,1\}$, by reformulation of the index i of the component $a_i$, $b_i$ in binary format,
- generation, from each function, of a polynomial of d variables $a(x_1,...x_d)$ $\hat{b}(x_1,...x_d)$ defined on a finite field, such that each polynomial $\tilde{a}, \hat{b}$ coincides with the corresponding function a,b on the set $\{0,1\}^d$, and generation, from the polynomials $\tilde{a}$ and $\hat{b}$ of a polynomial $p(x_1,...,x_d)$ of d variables of the same expression as that of the distance between the data,
- engagement, with the verification entity, in a Sumcheck verification protocol applied to the polynomial p,

when said program is executed on a computer.

**FIG. 1**

100 ⌐ **Authentification ou identification biométrique**

200 ⌐ **Vérification du résultat**

205 ⌐ Masquage des données

210 ⌐ Génération polynôme p

211 ⌐ Reformulation indices des composantes en binaire

212 ⌐ Génération polynômes pour chaque donnée

213 ⌐ Définition polynôme p à partir des polynômes des données

220 ⌐ Communication résultat H et données biométriques

230 ⌐ Application protocole Sumcheck

**FIG. 2**

**RÉFÉRENCES CITÉES DANS LA DESCRIPTION**

**Littérature non-brevet citée dans la description**

- Some Applications of Verifiable Computation to Biometric Vérification. **BRINGER et al.** Workshop on Information Forensics and Security (WIFS). IEEE, 2015